Europäisches Patentamt

European Patent Office

Office européen des brevets

(11) Publication number : **0 479 457 A1**

# (12) EUROPEAN PATENT APPLICATION

(21) Application number : 91308611.2

(22) Date of filing : 20.09.91

(51) Int. Cl.⁵ : **C09D 151/06**, C09J 151/06,
C09D 123/16, C09J 123/16

(30) Priority : 27.09.90 GB 9021090

(43) Date of publication of application :
08.04.92 Bulletin 92/15

(84) Designated Contracting States :
AT BE CH DE DK ES FR GB GR IT LI LU NL SE

(71) Applicant : BP Chemicals Limited
Belgrave House 76 Buckingham Palace Road
London, SW1W 0SU (GB)

(72) Inventor : Hope, Philip Stephen, BP Chemicals
Limited
PO Box 21, Bo'ness Road, Grangemouth
Stirlingshire FK3 9XH (GB)
Inventor : Malley, Peter John, BP Chemicals
Limited
PO Box 21, Bo'ness Road, Grangemouth
Stirlingshire FK3 9XH (GB)
Inventor : Quinn, Neil Christopher, BP
Chemicals Limited
PO Box 21, Bo'ness Road, Grangemouth
Stirlingshire FK3 9XH (GB)

(74) Representative : Wilson, Michael John et al
BP International Limited, Patents &
Agreements Division, Chertsey Road
Sunbury-on-Thames, Middlesex TW16 7LN
(GB)

(54) Adhesive or coating compositions and their uses.

(57) Polyolefin containing compositions with increased adhesion suitable for bonding to metals, such as steel, or polymers such as polyamides or EVOH, and to polyethylene eg to form layered structures or coated pipes, comprise A, a high density polyethylene grafted with an unsaturated carboxylic acid or derivative and B, a very low density polyethylene and preferably either consist essentially of A and B or also comprise C another polyolefin, eg HDPE or LDPE.

EP 0 479 457 A1

Jouve, 18, rue Saint-Denis, 75001 PARIS

EP 0 479 457 A1

The present invention relates to a composition having adhesive properties and its uses, in particular a polyolefin-containing adhesive composition and its bonding to metals and plastics and other materials.

Polyolefin-containing compositions suitable for use as adhesives are known. For example, UK Patent 2081723 discloses a modified polyolefin adhesive blend comprising (A) a graft copolymer of a polyethylene backbone grafted with at least one polymerisable ethylenically unsaturated carboxylic acid or anhydride and (B) a blending resin mixture comprising a linear low density polyethylene (LLDPE) and polypropylene. The patent states that the adhesive blends can be used to join polypropylene to a polar material or to join two polar materials together. US patent 4,198,327 discloses an adhesive blend comprising a graft copolymer of a high density polyethylene (HDPE) backbone grafted with at least one polymerizable ethylenically unsaturated carboxylic acid or anhydride and a hydrocarbon elastomer and optionally a medium density polyethylene. The patent describes the adhesion of the blend to aluminium, steel, tin plate or nylon. EP-A-35392 describes adhesive compositions of 1-100% graft polyethylene and 0-99% of another polyethylene of density 860-960 kg/m³, among which are ethylene propylene rubbers of density 865 and 870 kg/m³, and optionally another polyethylene, among which is high density polyethylene (HDPE); the compositions are for bonding to HDPE and nylon. EP-A-171777 describes adhesive compositions of 3-50% graft HDPE and 50-97% of a low density or linear low density polyethylene of density 880-935 especially 900-925 kg/m³; these compositions are for bonding to various metals, polypropylene or nylon. EP-A-315418 describes adhesive compositions comprising 1-30 parts of graft polyethylene eg graft HDPE per 100 parts of a mixture of 50-95% of ethylene alpha olefin copolymer of density 850-900 kg/m³ and ethylene content of 75-95 mol% and 5-50% of a copolymer of ethylene and a radical polymerisable polar unsaturated monomer eg vinyl acetate; the adhesives bond to a substrate which is a polyolefin, eg polyethylene, polypropylene, or maybe polyvinylidene chloride, polyester polycarbonate or olefin/vinylacetate copolymer saponification products. EP 366168 describes pipe coating adhesives comprising an adhesive olefin polymer having succinic acid or anhydride groups along the adhesive olefin polymer molecule chain, specifically maleic anhydride graft HDPE, blended with a low density polyethylene or a linear ethylene octene copolymer of density 938 kg/m³. The adhesion of the specific compositions described is not ideal. It is also known to bond polyolefins to metals using polyolefins modified with unsaturated carboxylic acids or anhydrides, after pretreating the metal surface with a silane coupling agent. Coupling agents which have been used include 3-[(glycidyloxy)propyl] trimethoxysilane, vinyl triethoxy silane and N-(2-aminoethyl)-3-aminopropyl trimethoxysilane. Such pretreatments add extra operation steps.

Improved polyolefin containing compositions have now been discovered which have a surprisingly high adhesion to steel without the need for a silane coupling agent and have very good adhesion to polar substrates especially to polyamide and hydrolyzed ethylene vinyl acetate copolymers.

According to the present invention, there is provided a polyolefin containing composition comprising (A) a graft copolymer comprising a backbone of polyethylene having a density greater than 935 kg/m³, grafted with at least one polymerisable ethylenically unsaturated carboxylic acid or derivative thereof and (B) a very low density polyethylene (also known as ultra low density polyethylene) of density 860-915 kg/m³, said composition preferably either consisting essentially of said components (a) and (B) or also comprising component (C) at least one other polyolefin.

The backbone of the graft copolymer can be any homopolymer or copolymer of ethylene having a density greater than 935kg/m³; preferably, the polyethylene comprises at least 90% and especially at least 98% of polymerized ethylene units with the remainder (if any) being alpha olefin units of 3 - 8 eg 4 - 6 carbons such as propylene or butene-1. The structure of the backbone is usually substantially linear with short chain branches. Thus, conventional high density polyethylene can be used. In particular, high density polyethylenes having a density in the range 935 - 980 preferably greater than 940 kg/m³, and in particular 941 - 965 kg/m³ are suitable. Preferably, the polyethylene used as the backbone has a Melt Index of greater than 0.1 g/10 mins eg greater than 1, such as 1 - 30 and especially 10 - 30 g/10 mins; in this specification unless otherwised specified all Melt Indices are measured at 190°C under 2.16 kg load according to BS 2782 Method 720A (1979) and expressed as g/10 mins.

The high density polyethylene usually has a crystallinity index measured by Differential Scanning Calorimetry of at least 30% eg 30-80%.

Polymerisable ethylenically unsaturated carboxylic acids and derivatives thereof such as amides esters and especially anhydrides include, for example, acrylic acid, methacrylic acid, maleic acid, itaconic acid, citraconic acid, mesaconic acid, maleic anhydride, 4-methyl cyclohex-4-ene-1,2-dicarboxylic acid anhydride, bicyclo (2.2.2) oct-5-ene-2,3-dicarboxylic acid anhydride, 1,2,3,4,5,8,9,10-octahydronaphthalene-2,3 dicarboxylic acid anhydride, 2-oxa-1,3-diketospiro (4.4) non-7-ene, bicyclo (2.2.1) hept-5-ene-2, 3-dicarboxylic acid anhydride, maleopimaric acid, tetrahydrophthalic anhydride, x-methyl-bicyclo (2.2.1) hept-5-ene-2,3-dicarboxylic acid anhydride, x-methyl-norborn-5-ene-2, 3-dicarboxylic acid anhydride, norborn-5-ene-2, 3-dicarboxylic acid anhydride, Nadic anhydride, methyl Nadic anhydride, Himic anhydride and Methyl Himic anhydride.

2

Acyclic unsaturated carboxylic acids or derivatives of such acids are preferred especially maleic anhydride. When maleic anhydride is used as the polymerisable ethylenically unsaturated carboxylic acid anhydride, the amount which is graft copolymerised with the polyethylene backbone is typically from 0.01 to 5% by weight, while usually molar equivalents of the other unsaturated acids or anhydrides can be used; usually weight percentages of 0.01 - 10% eg 1-5% such as 0.5-2% of the unsaturated acid or anhydride eg maleic anhydride are used for grafting.

Co-grafting monomers such as, for example, those described in US Patent 3873643 and 3882194 may also be used for preparing the graft copolymers of the present invention.

Methods for preparing graft copolymers are well known and any suitable method can be used to prepare the graft copolymer of polyethylene and polymerisable ethylenically unsaturated carboxylic acid or derivative thereof. One such suitable method comprises blending together the polyethylene and the polymerisable, ethylenically unsaturated, carboxylic acid or derivative thereof in the presence of a free radical initiator, such as an organic peroxide or hydroperoxide eg in amount of 0.01-0.5% such as 0.05-0.15% based on the weight of copolymer, at a temperature which is above the melting point of the polyethylene and which provides a suitable half-life of the free radical initiator. Suitable free radical initiators are well known but dicumyl peroxide and 1,3-bis(t-butyl peroxy isopropyl) benzene are preferred. This grafting process can be carried out using known mixing equipment such as, for example, a Brabender mixer, a Banbury mixer or a roll mill. Preferably, the grafting process is carried out in a closed vessel. A convenient method of preparing the graft copolymer is therefore to extrude the polymer backbone, polymerisable ethylenically unsaturated carboxylic acid or derivative thereof and an organic peroxide or hydroperoxide through a single or multiple screw extruder.

The second component of the adhesive or coating composition according to the present invention is very low density polyethylene (VLDPE), also known as ultra low density polyethylene. Such polymers are known and are copolymers of ethylene with one or more alpha-olefins especially at least 2 alpha olefins. Suitable alpha-olefins include those having from 3 to 10 carbon atoms such as propylene, butene-1, hexene-1, 4-methylpentene-1 and octene-1 but especially contain at least one alpha olefin of 4 to 10 carbons eg butene or octene optionally with propylene. They can be prepared by known low or high pressure processes in particular those with catalysts of chromium, titanium, vanadium, silicon and/or aluminium eg as described in GB-A-2006232, 2034336, 2034337, 2066274, 2131033 and EP-A-120503, the disclosure of which is hereby incorporated by reference. VLDPEs have a higher total comonomer content and lower density compared to linear low density polyethylene (LLDPE) but have a substantially linear structure with short chain branches. Typically, the total comonomer content of a VLDPE is from 5 to 25%, eg 10-25% such as 10 - 20% but especially 12-20% by weight or 5-20% preferably 5-14% molar (eg for butene-1 as comononer). Preferably the VLDPE is composed by weight of 4 - 15% such as 5-10% of propylene and 4-15% such as 6-12% of a higher olefin of at least 4 carbons such as butene though VLDPE with one comonomer eg of 6 - 10 carbons such as octene -1 can be used and especially in amount of 10-25 such as 13-20% by weight. The density of the VLDPE can be from 860 to 915 eg 875-910, preferably 880 to 900 or 905, or 890 to 900 or 905 but especially 885 to 905 or 895-905 kg/m$^3$. The density and weight percentage of total comonomers as specified above are preferably interrelated with high densities corresponding to low comonomer content and vice versa, so the VLDPE preferably have 10-20% weight percentage (x) comonomer and correspondingly densities of 915 to 870 kg/m$^3$ (y), especially with the further relationship that 4[x-10] + y = 895-930 especially 900-925. The degree of crystallinity of the VLDPE measured by Differential Scanning Calorimetry is usually 2 - 30% especially 5 - 15% . The VLDPE may have a Melt Index of 0.1 - 100g/10 min eg 0.1 - 50 or 0.1 - 25g/10 min but preferably 0.1 - 5g/10 min especially 0.1-2.5 g/10min. The VLDPE usually has a Flexural Modulus of Elasticity (expressed in MPa and measured according to ASTM D 790 - 80) of 10 - 160, 20-130, eg 30 - 100,100 - 150 or 40-120 and may have a 1% secant modulus of 20 - 170 preferably 35 - 140 or 45-140 and especially 60 - 120 MPa and measured according to ASTM D-638. The Tensile Strength at Yield (ie the Elastic Limit) measured according to ASTM D 638-80 is usually 2-10, eg 3-7 or 3-6 MPa while the Tensile Strength at Break measured according to NFT 54102 on 50 micron film is usually 10-60, eg 15-50 and especially 20-40 MPa in the machine or transverse direction and measured according to JIS K6301 is usually 0.5-10, eg 1-5, 1.8-4 or 4-8 KPa. The Torsional Rigidity Modulus measured according to ASTM D 1043 is usually 0.6-5, eg 0.7-1.3, 1.0-1.7 or 2-5 KPa. The VLDPE usually has a melting point (determined by Differential Scanning Calorimetry) of at least 85°C, eg at least 100°C such as 100-125°C eg 100°C - 120°C preferably 110-125°C such as 110-115°C or 112-125°C. Preferably the VLDPE is a copolymer of ethylene and a total of 10-20% by weight of at least one alpha olefin of 3-10 carbon atoms, and has at least one of the following properties (i) a 1% Secant Modulus of 20-170 MPa (ii) a degree of crystallisation of 2-30% (iii) a melting point of at least 100°C eg 100-125°C and (iv) a Melt Index of 0.1-5g/10 min. A mixture of two or more very low density polyethylenes can be used in the adhesive compositions according to the present invention.

The weight ratio of graft polyethylene to very low density polyethylene can be selected from a broad range, e.g. 5:95 to 80:20 preferably 5:95 to 70:30 such as 20:80 to 70:30 or 60:40 but particularly the ratio is in the range from 20:80 to 40:60 or 30:70 to 70:30, especially when the composition consists essentially of the graft polyethylene and VLDPE.

The compositions according to the present invention may be essentially free from other copolymers of ethylene with unsaturated copolymerisable monomers, especially radical copolymerisable polar unsaturated monomers such as vinyl acetate and alkyl (meth) acrylates, and may be especially free from other copolymers of ethylene with one or more copolymerisable monomers which are not alpha olefin hydrocarbons. Thus the compositions may consist essentially of the graft polyethylene and the VLDPE but can contain at least one additional polyolefin, e.g. polyethylene, especially of density at least 915 kg/m$^3$ such as low density eg of 915-930 kg/m$^3$ or medium or high density polyethylene eg of density greater than 935 or 950 kg/m$^3$ such as 935-980 or 950-965 kg/m$^3$ or linear low density polyethylene of density greater than 916 kg/m$^3$. The polyolefin may be a non polar hydrocarbon polymer or copolymer. The polyolefin may be a homopolymer, eg of ethylene or propylene or copolymer, eg of ethylene with at least one ethylenic unsaturated hydrocarbon eg alpha olefin of 3 - 10 carbons, and may be in particular a random or block copolymer. If an additional polyolefin is used in the composition, it may be a high density polyethylene of the same type as, and especially the same as, used for the backbone of the graft copolymer. The additional polyolefin can be present in an amount of 0-85% such as 0-70% or 1-75% such as 10-70% (especially for bonding to polar polymers or steel) and especially 30-70% by weight (especially for bonding to steel) all percentages being based of the total weight of the graft polyolefin and VLDPE and extra polyolefin in the adhesive composition. Particularly good results, especially in adhesion to steel, may be obtained when the weight proportion of extra polyolefin, especially extra low or high density polyethylene, to the graft polyolefin is 0-500:50 such as 10-350:50 preferably 100-275:50 especially 175-275:50 or 0-75:50 eg 10-75:50 preferably 10-50:50, especially when the weight proportion of graft polymer to VLDPE is 10:90 to 90:10 preferably 10-30:90-70 or 30:70 to 70:30.

In general the adhesive compositions with the extra polyethylene can contain 3-55% graft HDPE, 5-60% VLDPE and 20-85% extra polyethylene, especially LDPE, LLDPE or HDPE (percentages based in the total weight of the 3 components) in particular 8-40% or 8-20% graft HDPE, 5-60% or 25-55% VLDPE preferably 35-55% especially for adhesion to metals preferably steel, and 5-35% or 15-35% of extra polyethylene especially for bonding to organic polymers and 35-85% eg 35-55% especially for adhesion to metals preferably steel and 55-85% of extra polyethylene especially for bonding to organic polymers. These compositions especially with HDPE as third component may have melting points of at least 80° especially at least 95°C such as 80-130°C or 95-125°C.

The adhesive compositions according to the present invention can also contain additives conventionally used in poly olefinic compositions such as, for example, antioxidants, or in the case of coatings may contain pigments. The adhesive compositions of this invention may contain but preferably are substantially free of rubbers such as ones of 1% secant modulus less than 7 MPa (according to ASTM D-638) eg diene homo or copolymer rubbers, ethylene propylene rubbers and ethylene butene rubbers.

The blends of graft polyethylene and very low density polyethylene according to the present invention can be prepared using known techniques and equipment for batch or continuous blending of polymers.

The present invention includes the use of a polyolefin-containing adhesive composition according to the present invention at one or more layers in a layered structure with one or more other layers eg ones comprising a metal, paper or polymer layers. Also included are the layered structures formed using the polyolefin-containing adhesive composition according to the present invention especially a first polymer layer, an adhesive layer from the compositions of the invention and at least one layer of metal and/or polymer. The adhesive compositions are preferably used as coatings for metals eg steel, copper or aluminium or paper products such as cardboard eg to make containers for potable liquids. Compositions according to the present invention have been found to have surprisingly high adhesive strengths to metals, eg aluminium or copper but particularly steel, e.g. up to ten times the adhesive strength of a commercially available pipe cladding adhesive composition. The compositions are particularly suitable for coating steel e.g. pipe cladding. Pipe cladding may be performed by coating a hot metal pipe with a molten layer of the adhesive composition of the invention, followed if desired by a second layer of a protective polymer eg a polyolefin such as an ethylene homo or copolymer, eg of density 915-970 especially medium density polyethylene of density 930-945 kg/m$^3$; preferably the adhesive layer and protective layer are coextruded onto the hot metal pipe eg while it is rotated helically under a coextrusion head. The adhesive layer bonds well to the steel reducing delamination and corrosion, and binds well to be protective polymer.

The composition of the invention comprising graft HDPE, VLDPE and extra polyethylene eg LDPE or especially HDPE bond very well to steel, not only at ambient temperature but also at higher temperatures such as 40-80°C especially 50°C and 70°C, the temperatures used in the DIN standard test for steel pipe coating adhesives. The compositions especially those with 8-20% graft HDPE 25-55% VLDPE and 35-65% HDPE retain a significant percentage eg at least 30% of the adhesive strength at 60°C and at least 25% of the adhesive strength at 65°C even with thicknesses of adhesive composition of 125 microns, in both cases compared to the adhesives strength at 20°C. Compositions with higher percentages of graft HDPE, eg 30:70 to 70:30 graft HDPE to VLDPE may retain at 50°C at least 40% or 50% of their adhesive strength and retain at 70°C at least 10% of their adhesive strength even with thicknesses of adhesive composition of 125 microns. They are thus very suitable for coating for pipes in countries capable of having high ambient temperatures or for use with pipes for carrying hot materials such as pipelines in factories.

The compositions according to the invention also adhere strongly to polymers such as homo and copolymers of ethylene eg linear low density polyethylene, high density polyethylene, and also to hydrolyzed ethylene vinyl acetate copolymers also known as ethylene vinyl alcohol copolymers, and to thermoplastic polyesters such as polyethylene terephthalates and polycarboxamides eg nylon 6, 66, 10, 11, 12, 610, poly m-xylylene adipamide and poly m-xylylene sebacamide. The compositions according to the invention may therefore be used in multi-layered structures, e.g. films in which the composition according to the invention acts as an adhesive layer between the other polymeric layers. The adhesive composition can also be used as an extrudable melt adhesive.

The present invention also provides a polymer substrate having adhered thereto an adhesive composition according to the invention. Preferably the adhesive is present in a laminate comprising a first polymer layer, an intermediate layer of the adhesive composition and a second polymer layer, the first and second polymers being the same or different.

The polyolefin-containing adhesive blends according to the present invention are particularly suitable for bonding polyethylene to a polar material such as, for example a polycarboxamide such as nylon, a polyester or ethylene vinyl alcohol copolymers (EVOH). Methods for using adhesive compositions to bond polyethylene to polar substrates are known and include lamination, coextrusion, extrusion lamination and coextrusion coating.

The present invention includes multi-layered structures comprising a first layer comprising a polyethylene composition and a second layer comprising a polar material, the first and second layers being bonded together with an intermediate layer of a polyolefin-containing adhesive blend according to the present invention. In particular, the present invention relates to such multi-layered structures prepared by lamination of films or sheets but preferably by co-extrusion such as coextruded multi-layered film. The polyethylene layer can be any layer comprising a major proportion of a homo-polyethylene or copolymer of ethylene or blend thereof with another poly alpha olefin eg of 3 - 8 carbons such as a propylene polymer. Preferably, the polyethylene layer comprises at least 75% by weight of polymerised ethylene units with up to 25% such as 1 - 10% or 10 - 25% comonomer units of at least one alpha olefin of 3 - 10 carbon atoms such as propylene, butene-1, hexene-1, 4-methylpentene-1 and octene-1. The second layer comprising a polar material is preferably a layer comprising at least a major proportion eg 80 - 100% of a polar material selected from the group comprising a polycarboxamide eg nylon and ethylene-vinyl alcohol copolymers and possibly a minor proportion eg 0 - 20% such as 0.15% of at least one stabilizer or desiccant.

The multi-layered structures according to the present invention can include further layers in addition to the three layers hereinbefore defined. For example, a five-layered structure can comprise a first layer of polyethylene, a second layer of an adhesive composition according to the present invention, a third layer of an ethylene-vinyl alcohol copolymer, a fourth layer of an adhesive composition according to the present invention and a fifth layer of polyethylene.

The polyolefin-containing adhesive blends of the present invention may be used to produce multi-layered films or sheets with a satisfactory adhesion when the sheet is subsequently thermoformed, i.e. the sheet does not have a tendency to delaminate after thermoforming, eg into containers. The present invention includes articles produced by thermoforming a multi-layered sheet comprising a first layer comprising a polyethylene composition and a second layer comprising a nylon composition or an ethylene-vinyl alcohol copolymer composition, the first layer and the second layer being bonded together by an intermediate layer of a polyolefin containing adhesive blend according to the present invention.

It has been found that the adhesion achieved to hydrolyzed ethylene vinyl acetate copolymer (EVOH) is very much higher when the adhesive composition of the invention comprises a blend of component (A) the graft high density polyethylene, component (B) the very low density polyethylene and component (C) low density polyethylene, compared to the adhesion when the component (C) is linear low density, or high density polyethylene. In another aspect therefore the present invention provides a layered structure comprising a polyethylene layer, especially one of a linear low density polyethylene, an adhesive layer comprising components (A), (B) and (C) and a layer of hydrolyzed ethylene vinyl acetate (EVOH) copolymer.

The percentages of components (A), (B) and (C) in the adhesive layer (expressed by weight of the total of A, B and C) are usually 3 - 50%, 5 - 60% and 20 - 85% respectively, preferably 8 - 40%, 15 - 45% and 35 - 75% respectively. Adhesive compositions having these percentages of components (A), (B) and (C) constitute another aspect of the present invention.

The low density polyethylene for use generally as component C but especially for adhesion to steel or EVOH is usually of density 916 - 925 kg/m$^3$. LDPE a branched structure with long chain branches of irregular length randomly distributed, in contrast to the structure of linear low density polyethylenes and high density polyethylene which have very short branches of substantially constant length regularly distributed. The low density polyethylene is usually made by a free radical polymerization process such as a high pressure one. The low density polyethylene usually has a Melt Index of 0.1 - 15 g/10 mins eg 0.1 - 10 such as 0.5 - 5 g/10 mins. The low density polyethylene is preferably a homopolymer or copolymer with 0.5 - 10% by weight of an alpha olefin with 3 - 10 carbons such as propylene, butene-1, pentene-1, hexene-1, 4-methylpentene-1 or octene-1. While the layered structure may have the 3 layers specified above, preferably there are 2 more layers, namely a further adhesive layer of the composition of the invention adhering to the EVOH layer and a surface layer of polyethylene, especially linear low density polyethylene.

The invention is illustrated in the following Examples.

## Example 1

A copolymer was prepared by grafting maleic anhydride (MAH) onto a high density polyethylene (HDPE). The high density polyethylene used was a commercially available polymer in the form of powder produced by BP Chemicals under the trade designation BP HD5218 and sold in the form of stabilized pellets under the designation HD 5218EA. This polymer has a density of 952 kg/m$^3$ and a Melt Flow Rate of 18 g/10 mins (measured according to BS 3412/1976 and ISO 1133/1981 Condition 4).

The MAH-g-HDPE was prepared by reacting together maleic anhydride and the high density polyethylene in the presence of dicumyl peroxide. The grafting reaction was carried out by mixing the high density polyethylene powder with 1.0% by weight of maleic anhydride and 0.1% by weight of dicumyl peroxide in a Brabender Plasti-Corder for 10 minutes at 180°C and 60rpm (BRABENDER and PLASTI-CORDER are registered trade marks).

50% by weight of the MAH-g-HDPE was blended with 50% by weight of a very low density polyethylene (VLDPE) by mixing in a Brabender Plasti-Corder for 10 minutes at 180°C and 60rpm. The very low density polyethylene used was a commercially available material sold by Orkem under the trade designation Norsoflex LW2550 (NORSOFLEX is a trade mark). This polymer has a density of 887 (or 890) kg/m$^3$, and a Melt Index of 1.7 g/10 mins, a melting point of 111°C, a Tensile Strength at Yield (ASTMD 638-80) of 2.5 MPa, a Flexural Modulus of Elasticity of 32 MPa (ISO 178), a 1% secant modulus believed to be about 30-40 MPa (ASTM D-638) and a Degree of Crystallinity (by DSC) of 15%. It is a copolymer of ethylene, with a small proportion, believed to be in the range 10 - 20% by weight, of one or more alpha olefins of 3 - 8 carbons, believed to be propylene and butene.

The strength of the adhesive bond between the composition according to the invention and a grit blasted steel test panel was determined using an Instron Universal Testing Machine. A sandwich compression moulding was prepared by preheating a mould to 200°C and then placing in the mould a grit blasted test panel and a sheet of the VLDPE/MAH-g-HDPE blend and then another grit blasted test panel on top to make a sandwich, the panels and sheet measuring 150 mm x 100 mm x 125 microns. The sheets were preheated in the mould for 5 minutes under no pressure, the load was then increased to 10 tonnes for 2 minutes and then the mould was cooled under load. The sandwich mouldings were cut into 25 mm wide strips and the average force required to separate at 180° the VLDPE/MAH-g-HDPE blend from the steel panel was measured at 23°C ± 2°C using an Instron Universal Testing Machine at a crosshead speed of 100 mm/minute. The peel strength, i.e. the steady state load during peel, expressed as g/mm of sample width was determined for several samples. The average peel strength is given in Table 1 in which the HDPE is designated as type I.

## Examples 2 and 3

Example 1 was repeated except that the weight ratio of MAH-g-HDPE:VLDPE was 30:70 (Example 2) and 70:30 (Example 3). The average peel strengths for these compositions are given in Table 1.

## Example 4

Example 1 was repeated except that the maleic anhydride grafted high density polyethylene was prepared on a ZSK-30 twin screw extruder using the same amounts of maleic anhydride and dicumyl peroxide and the same grade of high density polyethylene except that it was in the form of pellets. The average peel strength is given in Table 1 in which the HDPE is noted as Type II.

Examples 5 and 6

Example 4 was repeated except that the 50% weight of MAH-g-HDPE was replaced by (a) 30% by weight of the MAH-g-HDPE and 20% by weight of the unmodified, pelleted, HDPE in Example 5 and (b) by 10% of the MAH-g-HDPE and 40% of the unmodified, pelleted, HDPE in Example 6. The average peel strengths are given in Table 1.

Comparative Examples A to L

For comparison, the average peel strengths to steel of eleven compositions not according to the present invention were determined. These compositions were:-
(A) unmodified HDPE powder (BP HD5218),
(B) maleic anhydride grafted high density polyethylene (MAH-g-HDPE) as used in Example 1.
(C) very low density polyethylene (Norsoflex LW2550)
(D) 30% by weight of the same MAH-g-HDPE as used in Example 1
70% by weight of an ethylene/propylene copolymer rubber (EPR) with 75% wt ethylene,
sold by Exxon under the trade designation Vistalon 808 (Vistalon is a trade mark),
(E) 30% by weight of the same MAH-g-HDPE as used in Example 1
70% by weight of a medium-diene, ethylene/propylene/diene monomer (EPDM) rubber (with 65 wt % ethylene) sold by Exxon under the trade designation Vistalon 3708,
(F) 30% by weight of the same MAH-g-HDPE as used in Example 1
70% by weight of a high diene EPDM rubber (with 70 wt % ethylene)sold by Exxon under the trade designation Vistalon 7000,
(G) commercially available pipe cladding adhesive A,
(H) commercially available pipe cladding adhesive B
(J) Vistalon 808 Rubber
(K) Vistalon 3708 Rubber
(L) Low density homo polyethylene LDPE sold by BP Chemicals under the designation MFA 151
The average peel strengths to steel are given in Table 1.

TABLE 1

| Example | Composition (%wt) | | | | | | | Peel Strength to Steel |
|---|---|---|---|---|---|---|---|---|
| | VLDPE | MAH-g-HDPE | | HDPE | EPR | EPDM | | g/mm |
| | | I | II | | | I | II | |
| 1 | 50 | 50 | – | – | – | – | – | 450 |
| 2 | 70 | 30 | – | – | – | – | – | 310 |
| 3 | 30 | 70 | – | – | – | – | – | 330 |
| 4 | 50 | – | 50 | – | – | – | – | 1000 |
| 5 | 50 | – | 30 | 20 | – | – | – | 950 |
| 6 | 50 | – | 10 | 40 | – | – | – | 550 |
| A | – | – | – | 100 | – | – | – | 10 |
| B | – | 100 | – | – | – | – | – | 50 |
| C | 100 | – | – | – | – | – | – | 0 to 5 |
| D | – | 30 | – | – | 70 | – | – | 60 |
| E | – | 30 | – | – | – | 70 | – | 170 |
| F | – | 30 | – | – | – | – | 70 | 50 |
| G | – | – | – | – | – | – | – | 100 |
| H | – | – | – | – | – | – | – | 150 |
| J | – | – | – | – | 100 | – | – | 6 |
| K | – | – | – | – | – | 100 | – | 32 |
| L | – | – | – | – | – | – | – | 5 |

Example 7

The strength of the adhesive bond between the composition of Example 4 and various substrates other than steel was determined by the method described in Example 1. Instead of the grit blasted steel panel, sheets of the following materials were compression moulded to either side of a sheet of the adhesive composition of Example 4:

     aluminium
     paperboard
     low density polyethylene
     high density polyethylene
     linear low density polyethylene
     Nylon 6
     ethylene/vinyl alcohol copolymer

The average peel strength to aluminium was 1000g/mm. The adhesive strength of the composition of Example 4 to the other materials was so high that it could not be peeled from these materials.

Example 8

2 MAH graft high density polyethylenes were prepared, graft polymer A being prepared as described in Ex 4 and graft polymer B being prepared by an analoguous route to that of Ex 4 but with 0.085% w/w, 1,3 - bis(t-butylperoxyisopropyl) benzene instead of the dicumyl peroxide.

Polymer A or B was blended with the very low density polyethylene which was either that used in Ex 1 (VLDPE C) or one sold by Orkem under the trade designation Norsoflex FW1900 (VLDPE D). The latter polymer had a density of 900 kg/m$^3$ a melting point of 116°C, a Melt Index of 1.0 g/10 mins, a Secant Modulus (1%) measured according to ASTM D638 of 77.5 MPa, a Tensile Strength at Yield (ASTM D638-80) of about 4.5 MPa, a Tensile Strength at Break (NFT 54102) on a 50 micron film of 27 and 31 MPa in the transverse and machine directions respectively, a Flexural Modulus of Elasticity of about 90 MPa (according to ASTM D 790-80) and a Degree of Crystallinity of 12-15% (by DSC). It is an ethylene alpha olefin copolymer and is believed to be a copolymer of 84% w/w ethylene with 7% w/w propylene and 9% w/w 1-butene. The third component of the blends was the low density polyethylene LDPE sold by BP Chemicals under the trade designation LD 5320AA; this polymer had a density of 920 kg/m$^3$, a Melt Index of 2.3g/10min and was a homopolymer of ethylene. The blending was performed in an APV MP 2065 compounding screw extruder with extruder barrel temperature at 200°C and screw speed at 350 rpm; the output rate was 120kg/hr.

Instead of the LDPE as third component blends were also made with linear low density polyethylene LLDPE (sold by BP Chemicals under the designation LL 0220 AA of density 920 kg/m$^3$ and Melt Index of 2.0 g/10 mins, or high density polyethylene HDPE (sold by BP Chemicals under the designation HD 5211EA), with a density of 950 kg/m$^3$ and a Melt Index of 11g/10 min.

The adhesive compositions were used to prepare multi-layered film by coextrusion. Each multi-layered film comprised a first 32 micron thick layer of a linear low density polyethylene, a second 5 micron thick layer of the adhesive composition, a third 6 micron thick layer of ethylene-vinyl alcohol copolymer, EVOH, supplied by BXL Plastics, a fourth 5 micron thick layer of the adhesive composition and a fifth 32 micron thick layer of the linear low density polyethylene.

25 mm wide sample strips of the coextruded films were subjected to a peel test to determine the force required to peel an outer layer of polyethylene from the inner layer of EVOH when the outer polyethylene layer is pulled at 180° from the sample strip using an Instron Universal Testing Machine at a crosshead speed of 100 mm/min. The peel strength, ie the steady state load during peel, expressed as g/mm of sample width was determined for several strips. The results were as follows:

| Example | Adhesive Composition | | | Laminate | |
|---------|------------|-----------|-----------|------------|-----------|
| | % graft HDPE | Nature and % VLDPE | Nature and % Polyethylene | Interfacial Adhesion g/mm | Elongation to break % |
| 8.1 | 10 B | 30 D | 60 LDPE | CNP | 420 |
| 8.2 | 30 B | 30 D | 40 LDPE | CNP | 510 |
| 8.3 | 10 B | 30 C | 60 LDPE | CNP | 530 |
| 8.4 | 10 B | 10 D | 80 LDPE | CNP | 380 |
| 8.5 | 10 B | 20 D | 70 LDPE | CNP | 410 |
| 8.6 | 10 B | 50 D | 40 LDPE | CNP | 520 |
| 8.7 | 10 A | 30 D | 60 LDPE | CNP | 400 |
| 8.8 | 10 B | 30 D | 60 LLDPE | 13 | 710 |
| 8.9 | 10 B | 30 D | 60 HDPE | 4 | 430 |

CNP means that one "could not peel" the laminates apart without tearing one or more layers, rather than separating one or more layers.

### Example 9

In a similar way to that of Example 8, five layer laminates were made with the EVOH replaced by a layer of the same thickness of a polyamide which was supplied by BXL Plastics.

The compositions of the adhesives in Ex 9.1, 9.4, 9.8 and 9.9 respectively were as in Ex 8.1, 8.4, 8.8 and 8.9. The results given below are for interfacial adhesion, for break stress of the laminate expressed in MPa and elongation to break. The latter 2 tests were performed on 10 mm wide samples of film cut in the machine direction and tested on an Instron machine with a crosshead speed of 500mm/min.

| Example | Break Stress | Adhesion | Elongation to break % |
|---------|--------------|----------|-----------------------|
| 9.1 | 19.1 | CNP | 390 |
| 9.4 | 17.9 | CNP | 380 |
| 9.8 | 19.5 | CNP | 410 |
| 9.9 | 20.3 | CNP | 440 |

In a comparison with a commercial BYNEL 3048 adhesive composition from duPont replacing the adhesive in Ex 9, the break stress was only 14.9 MPa, the adhesion was CNP and elongation to break 320%.

### Examples 10 and 11 and Comparative Ex M and N

The process of Ex 6 was repeated with different percentages of VLDPE and HDPE blended into the compositions and their adhesion to steel test panels, which had not been grit blasted, was determined (Ex 10, 11). The processes of Ex 10, 11 were repeated with the VLDPE replaced by a linear low density polyethylene (LLDPE) sold by BP Chemicals under the designation LL 7209AA of density 920 kg/m³ and Melt Index of 0.9 g/10 mins (comp Ex M and N). The results were as follows.

| Example | Graft HDPE % | LLDPE % | VLDPE % | HDPE % | Peel Strength g/mm |
|---------|--------------|---------|---------|--------|--------------------|
| 10 | 10 | | 90 | | >345 |
| 11 | 10 | | 30 | 60 | 114 |
| M | 10 | 90 | | | 94 |
| N | 10 | 30 | | 60 | 33 |

In Ex 10 the peel strength was greater than 345g/mm but could not be determined as the adhesion was greater than the compressive force retaining the sample in the test machine.

The compositions of Ex 10 and 11 were also tested for adhesion to a layer of HDPE (as used in Ex 1) but the strengths were so high that the composition could not be peeled from the HDPE.

### Examples 12-17

The process of Ex 4 was repeated with the VLDPE (NORSOFLEX FW1900) used in Ex 8 and also a further VLDPE, a copolymer of ethylene and 18% butene (wt) of density 880 kg/m³ and Melt Index 3.6g/10 mins, a Tensile Strength at Break of 280 kg/cm² (2.74 KPa) (tested according to JIS K 6301) and a Torsional Rigidity Modulus of 90 kg/cm² (0.88 KPa) (tested according to ASTM D 1043) and a Flexural Modulus of Elasticity (according to ASTM D790-80) of about 30-35 Mpa as sold by Mitsui Petrochemical under the trademark TAFMER A4085. In addition the graft copolymers were prepared as in Ex 4 but in different twin screw extruders (Graft Polymers 3 and 4), the third components were high pressure low density polyethylenes LDPE, namely that used in Ex 8 and also one of Density 917 kg/m³ and Melt Index 12g/10 mins sold by Exxon Chemicals under the designation LD202. The peel strengths measured were obtained in the 180° test used in Ex 8 and also the corresponding 90° (T-peel) test. The results were as follows.

| Example | Graft HDPE % | VLDPE % | LDPE % | Adhesion to Steel | | | |
|---|---|---|---|---|---|---|---|
| | | | | T Peel | | 180° | |
| | | | | lb/in | g/mm | lb/in | g/mm |
| 12 | (Ex 4), 10% | 30 | 60 | 12 | 210 | 19 | 340 |
| 13 | (Ex 4), 10% | 10 | 80 | 10 | 180 | 20 | 360 |
| 14 | 3, 10% | 10 | 80 | 7 | 125 | nd | nd |
| 15 | 3, 10% | 30 | 60 | 8 | 140 | nd | nd |
| 16 | 4, 10% | 10 | 80 | 6 | 110 | nd | nd |
| 17 | 4, 10% | 30 | 60 | 7 | 125 | nd | nd |

nd = not determined.

In Ex 12 and 13, the VLDPE and LDPE were those used in Ex 8, while in Ex 14-17 they were the TAFMER A4085 and LD202 polymers respectively.

## Examples 18-23

The adhesion tests with the composition and adhesive sheet of Example 6 were repeated three times in Examples 18-20 with the steel and its adherent layer at above ambient temperature. The average "T peel" peel strengths in g/mm were 196 (at 60°C), 186 (at 65°C) and 41 (at 80°C).

The adhesion to steel with the composition and adhesive sheet of Example 4 was repeated in Examples 21-23 with a shot blasted steel block carrying the sheet of the adhesive composition as a layer sandwiched between the block and a layer of medium density polyethylene. The tests were performed at room temperature and at above ambient temperature in a manner to replicate the procedures of DIN 30670. The results for 90° peel strength to peel off the polyethylene layer were as follows:

| | Room Temp (ca. 20°C) | 50°C | 70° |
|---|---|---|---|
| Average Peel Strength g/mm | > 1320 | 720 | 190 |
| Average Peel Strength N/cm | > 132 | 72 | 19 |
| DIN Minimum N/cm | Not Applicable | 35 | 15 |

**Claims**

1. A polyolefin-containing adhesive or coating composition comprising component (A) a graft copolymer comprising a backbone of polyethylene, said backbone having a density greater than 935 kg/m³, grafted with at least one polymerisable ethylenically unsaturated carboxylic acid or derivative thereof and component (B) a very low density polyethylene of density 860-915 kg/m³, said composition either consisting essentially of said components A and B or also comprising component (C) at least one other polyolefin.

2. A composition according to claim 1 where component (B) has a density of 880-905 kg/m³.

3. A composition according to claim 1 or 2 wherein the polymerisable carboxylic acid or derivative is maleic anhydride

4. A composition according to any use of claims 1-3, wherein the weight ratio of (A) to (B) is 5:95 to 70:30.

5. A composition according to claim 4 wherein said weight ratio is 20:80 to 70:30.

6. A composition according to any one of the preceding claims, which consists essentially of (A) and (B).

7. A composition according to anyone of claims 1-5 which also contains (C) at least one other polyethylene.

8. A composition according to claim 7, which comprises (A) and (B) in a weight ratio of 5:95 to 70:30 and an amount of C which is 10-70% of the total weight of (A) (B) and C.

9. A composition according to claim 8 which comprises (A) and (B) in a weight ratio of 5:95 to 30:70.

10. A composition according to claim 8 or 9 wherein the weight percentage of (C) to the total of A, B and C is 30-70%.

11. A composition according to claim 8 or 9, which comprises 3-50% (A), 5-60% (B) and 20-85% (C) by weight of the total of (A), (B) and (C).

12. A composition according to claim 11 which comprises 8-40% (A), 15-60% (B) and 35-75% (C).

13. A composition according to any one of claims 7-12 wherein the other polyethylene has a density of greater than 935 kg/m³.

14. A composition according to any one of claims 7-12 wherein the other polyethylene is a low density polyethylene of density 916-925 kg/m³.

15. A structure comprising a substrate comprising at least one of metal, polyamide and paper, said substrate having adhered thereto a coating or layer of a composition comprising component (A) a graft copolymer comprising a backbone of polyethylene, said backbone having a density greater than 935 kg/m³, grafted with at least one polymerisable ethylenically unsaturated carboxylic acid or derivative thereof and component (B) a very low density polyethylene of density 860-915 kg/m³.

16. A structure comprising a polymeric substrate having adhered thereto a coating or layer of a composition comprising component (A) a graft copolymer comprising a backbone of polyethylene, said backbone having a density greater than 935 kg/m³, grafted with at least one polymerisable ethylenically unsaturated carboxylic acid or derivative thereof and component (B) a very low density polyethylene of density 860-915 kg/m³, said composition consisting essentially of said components A and B or comprising also component (C) at least one other polyolefin.

17. A structure according to claims 15 or 16 wherein said composition is as claimed in any one of claims 2-14.

18. A structure according to claim 15 or 17 wherein said substrate is steel.

19. A structure according to claims 16 or 17 wherein said substrate is a polar polymer which is a polycarboxamide or hydrolyzed ethylene vinyl acetate copolymer

20. A structure according to any one of claims 15-19 wherein the adhesive composition is also adhered to a polyethylene layer.

21. A structure according to claims 18 or 20 wherein the substrate is steel and the composition is as defined in claims 10 or 13 when appendant thereto.

22. A structure according to claims 20 or 21 wherein the substrate is a polar polymer, which is a polycarboxamide and the adhesive composition is as defined in any one of claims 8-14.

23. A structure according to claims 20 or 21 wherein the substrate is a hydrolyzed ethylene vinyl acetate copolymer and the composition is as defined in claim 9 with a low density polyethylene as (C).

24. Use of an adhesive or coating composition as defined in any one of claims 1-16 for bonding to or coating one or more layers comprising metal, paper or polymer.

25. A method of bonding or coating at least one layer comprising metal paper or polymer, which comprises adhering thereto a composition as defined in any one of claims 1-16.

## European Patent Office

## EUROPEAN SEARCH REPORT

**Application Number**

EP 91 30 8611

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | EP-A-0 035 392 (MITSUI PETROCHEM)<br><br>* page 4, line 4 - line 28 *<br>* page 5, line 3 - line 20 *<br>* page 7, line 16 - line 24 *<br>* page 14, line 24 - line 26 *<br>* examples 5-14; tables 2,4 *<br>* claims *<br>--- | 1-6,<br>15-20 | C09D151/06<br>C09J151/06<br>C09D123/16<br>C09J123/16 |
| X,D | EP-A-0 171 777 (DOW CHEM COMP)<br><br>* page 2, line 23 - line 31 *<br>* page 4, line 6 - line 19 *<br>* page 5, line 6 - line 14; example 1 *<br>* claims 1-4,10-14 *<br>--- | 1-6,<br>15-20 | |
| X | US-A-4 087 587 (M. SHIDA ET AL)<br>* column 1, line 45 - line 63 *<br>* claims 1-3,5 *<br>--- | 1,3,15 | |
| X | GB-A-2 228 488 (DU PONT CANADA)<br><br><br>* page 5, line 5 - line 10 *<br>* claims 1-4; examples *<br>see esp. those expls. without additn. of agent:<br>table 1,run 1,8; t.2,r.9,14,16; t.3,r.17,22.<br>--- | 1-4,15,<br>16,18,<br>19,20 | TECHNICAL FIELDS SEARCHED (Int. Cl.5)<br><br>C09D<br>C09J<br>C08L |
| X | EPO 016 617 (MITSUI PETROCHEM)<br>* page 4, line 22 - line 37 *<br>* page 6, line 1 - line 14 *<br>* claims 1-6; examples; table 1 *<br>--- | 1,3-5,15 | |
| P,X | EP-A-0 434 386 (DOW CHEM. COMP.)<br>* page 3, line 13 - line 53; claims 1-4,9-21;<br>examples 4-6 *<br><br>----- | 1-8 | |

The present search report has been drawn up for all claims

| Place of search | Date of completion of the search | Examiner |
|---|---|---|
| THE HAGUE | 22 JANUARY 1992 | ENGEL H.S.L. |

EPO FORM 1503 03.82 (P0401)